(19)

Europäisches
Patentamt
European
Patent Office
Office européen
des brevets

(11)  **EP 1 802 015 A1**

(12)  **EUROPEAN PATENT APPLICATION**

(43) Date of publication:
**27.06.2007 Bulletin 2007/26**

(51) Int Cl.:
*H04J 3/06* (2006.01)  *G06F 1/14* (2006.01)

(21) Application number: **06255844.0**

(22) Date of filing: **15.11.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **23.12.2005 US 317711**

(71) Applicant: **Agilent Technologies, Inc.
Santa Clara, CA 95051 (US)**

(72) Inventors:
• **Hamilton, Bruce
Loveland,
CO 80537-0599 (US)**

• **Eldson, John C.
Loveland,
CO 80537-0599 (US)**
• **Kanevsky, Valery
Loveland,
CO 80537-0599 (US)**

(74) Representative: **Exell, Jonathan Mark et al
Williams Powell
Morley House
26-30 Holborn Viaduct
London EC1A 2BP (GB)**

(54) **Removing delay fluctuation in network time synchronization**

(57)     Techniques for removing delay fluctuations from network time synchronization so that timing packets that experience an inordinate network delay to not cause unneeded adjustments to a local clock (16). Time synchronization according to the present techniques includes measuring a network delay associated with a timing packet and discarding the timing packet if the network delay exceeds an adjustable threshold. The adjustable threshold enables balancing the quality of delay measurements in terms of delay fluctuation against the number of delay measurements that are sufficient to maintain time synchronization.

FIG. 1

EP 1 802 015 A1

**Description**

**BACKGROUND**

A wide variety of devices may include a local clock that maintains a time-of-day. Examples devices that may have a local time-of-day clock include computer systems, test instruments, industrial control devices, environmental control devices, and home appliances.

A time synchronization protocol may be used to synchronize a local clock in a device. A time synchronization protocol may be one in which a local clock exchanges timing packets with a reference clock via a communication network. The transmit and receive times of the timing packets may be used to determine a time offset between a local clock and a reference clock so that the local clock may be adjusted to match the time in the reference clock. One example of a time synchronization protocol that includes the exchange of timing packets is the IEEE 1588 time synchronization protocol. Another example is the network time protocol (NTP).

A time offset that is derived from the exchange of timing packets may include a network delay associated with the transfer of the timing packet over a communication network. The network delay may be removed from a time offset before applying the time offset to a local clock. For example, a running average of the network delays for a series of timing packets may be determined and the running average may be subtracted from the time offset calculations.

The network delays of timing packets may fluctuate in response to changes in network conditions. For example, a timing packet transferred during a period of relatively high network traffic may experience a much larger network delay than a timing packet transferred during a period of relatively low network traffic. Fluctuations in network delay may reduce the precision of a time synchronization protocol. For example, timing packets having a network delay that significantly exceeds a running average of network delays may cause an unneeded adjustment to a local clock.

**SUMMARY OF THE INVENTION**

Techniques are disclosed for removing delay fluctuations from network time synchronization so that timing packets that experience an inordinate network delay to not cause unneeded adjustments to a local clock. Time synchronization according to the present techniques includes measuring a network delay associated with a timing packet and discarding the timing packet if the network delay exceeds an adjustable threshold. The adjustable threshold enables balancing the quality of delay measurements in terms of delay fluctuation against the number of delay measurements that are sufficient to maintain time synchronization.

Other features and advantages of the present invention will be apparent from the detailed description that follows.

**BRIEF DESCRIPTION OF THE DRAWINGS**

The present invention is described with respect to particular exemplary embodiments thereof and reference is accordingly made to the drawings in which:

**Figure 1** shows a pair of devices that include mechanisms for removing delay fluctuations in network time synchronization according to the present teachings;

**Figure 2** shows a method for removing delay fluctuations in network time synchronization according to the present teachings;

**Figure 3** shows a method for removing fluctuations from time offset adjustments according to the present teachings.

**DETAILED DESCRIPTION**

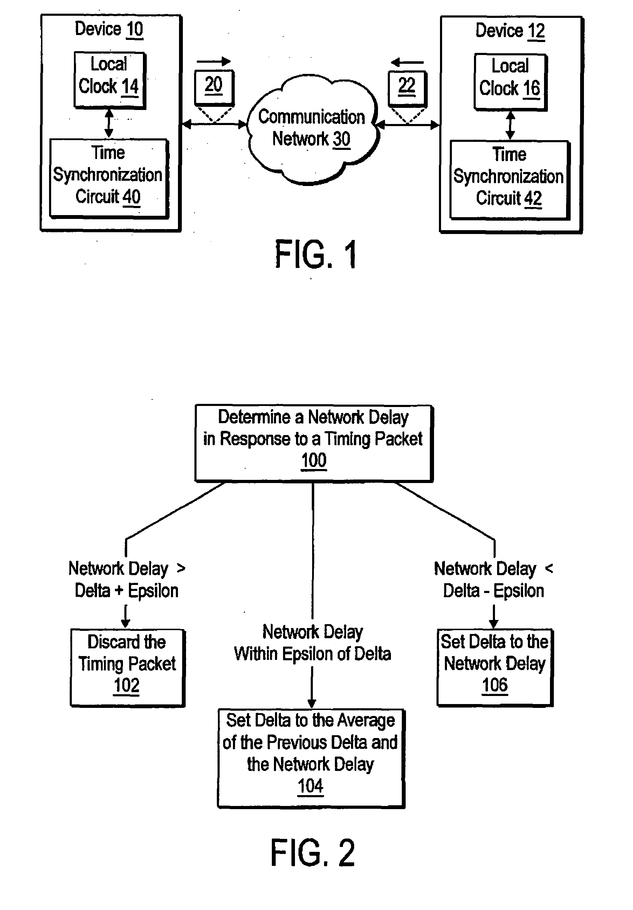

**Figure 1** shows a pair of devices 10 and 12 that include mechanisms for removing delay fluctuations in network time synchronization according to the present teachings. Example embodiments of the devices 10 and 12 include computer systems, test instruments, industrial control devices, environmental control devices, home appliances, etc.

The device 10 includes a local clock 14 and the device 12 includes a local clock 16. The devices 10 and 12 include respective time synchronization circuits 40 and 42 that maintain time synchronization in the local clocks 14 and 16 by exchanging timing packets via a communication network 30, e.g. a set of timing packets 20-22.

In one embodiment, the time synchronization circuits 40 and 42 maintain time synchronization according to the IEEE 1588 time synchronization protocol. In the example shown, the time synchronization circuit 42 adjusts the time-of-day in the local clock 16 to conform to the time-of-day held in the local clock 14 of the device 10, i.e. the local clock 14 is a master clock and the local clock 16 is a slave clock.

For example, the time synchronization circuit 40 generates the timing packet 20 and transfers it to the time synchronization circuit 42 via the communication network 30 and the time synchronization circuit 42 generates the timing packet 22 and transfers it to the time synchronization circuit 40 via the communication network 30. The time synchronization circuit 40 measures a transmit time (T1) of the timing packet 20 and the time synchronization circuit 42 measures a receive time (T2) of the timing packet 20. Similarly, the time synchronization circuit 42 measures a transmit time (T3) of the timing packet 22 and the time synchronization circuit 40 measures a receive time (T4) of the timing packet 22. A time offset (OFFSET) to be applied to the local clock 16 is derived from the time-stamps T1-T4 (according to the IEEE 1588 time synchronization protocol in one embodiment)

In one embodiment, the network delay of the timing packet 20, i.e. the network delay from master to slave (MSD), is assumed to be equal to the network delay of the timing packet 22, i.e. the network delay from slave to master (SMD). The time offset for the local clock 16 is as follows.

$$OFFSET = T2 - T1 - ONE\ WAY\ DELAY \qquad (equation\ 1)$$

where

$$ONE\ WAY\ DELAY = (MSD + SMD)/2$$

and

$$MSD = (T2 - OFFSET) - T1 \qquad (equation\ 2)$$
$$SMD = T4 - (T3 - OFFSET).$$

Equation 1 shows that the time offset to be applied to the local clock 16 is a function of the network delay experienced by a timing packet carried via the communication network 30 between the devices 10 and 12. It is likely that the network delay experienced by a timing packet will fluctuate depending on the amount of network traffic underway. For example, the communication network 30 may handle traffic for other devices (not shown) or may handle data packets for application-specific functions of the devices 10 and 12 that are not timing packets. High volumes of network traffic at times may cause some of the timing packets exchanged by the devices 10 and 12 to experience inordinately long delays. For example, a timing packet may experience a substantially higher delay by waiting in a queue in a communication switch of the communication network 30 during a period of high traffic volume. A queuing delay imposed on a timing packet may cause an inordinately large time offset to be applied to the local clock 16 according to equation 1. A time offset yielded by an excessively delayed timing packet may degrade the accuracy in the time synchronization of the local clock 16.

The present techniques for removing network delay fluctuations include discarding timing packets that have experienced excessively high network delay using an adjustable threshold of excessive delay. The discarding of timing packets that experience an excessive network delay avoids unneeded time adjustments to the local clock 16. For example, equation 2 may be used to determine the network delay of a timing packet so that the timing packet may be discarded if its network delay is substantially larger than the network delay associated with timing packets exchanged by the devices 10 and 12 that do not experience excessive network delay. If a timing packet is discarded then the timing information derived from the timing packet is not used to determine a time offset to be applied to the local clock 16.

In some embodiments, the time-of-day held in the local clock 16 may advance relatively smoothly. In such embodiments, once a time synchronization servo settles it need not follow excursions accurately. The updates to the local clock 16 may be of relatively low bandwidth and still maintain adequate time synchronization. Therefore, the balance between the quality of delay measurements and the number of delay measurements may be tipped toward higher quality and fewer delay measurements.

Timing packets occasionally encounter a path through the communication network 30 with no queuing delays. All timing packets that take that path have substantially similar amounts of network delay. Timing packets that are queued have a much larger network delay than the network delay experienced by timing packets having no queuing delay so that timing packets that are queued may be recognized.

The devices 10 and 12 include respective communication subsystems that are adapted for communication via the communication link 30 and that enable the time synchronization circuits 40 and 42 to exchange timing packets via the communication link 30. For example, the communication subsystems may include media access controller, (MAC) and physical interface (PHY) elements, etc., depending on the implementation of the communication network 30. The time synchronization circuits 40 and 42 may include processor subsystems that implement a network protocol stack and that generate timing packets and that obtain timing information from timing packet. The time synchronization circuits 40 and 42 may also include time packet recognizer circuitry for recognizing and time stamping inbound and outbound timing packets.

Figure 2 shows a method for removing delay fluctuations in network time synchronization according to the present teachings. The method step shown may be used to determine a minimum network delay path for a timing packet carried on the communication network 30 between the device 10 and 12 so that timing packets exchanged by the devices 10 and 12 having excessive delay may be selected and discarded. In the following, the minimum network delay is represented by the variable delta. An adjustable threshold of epsilon includes the expected network delay jitter on the communication network 30 without queuing delays.

Initially, a relatively large initial value is chosen for delta. An example of a large initial value for delta is an estimate of the time for sending a timing packet around the world via a network.

At step 100, the timing information associated with an incoming timing packet, e.g. measured and/or transported time stamps, is used to determine a network delay between the devices 10 and 12. In one embodiment, the network delay determined at step 100 is the round-trip network delay. The network delay at step 100 may be determined according to IEEE 1588 calculations or NTP calculations or other similar time synchronization protocol depending on a particular embodiment.

At step 102, if the network delay from step 100 is greater than delta + epsilon, then the corresponding timing packet is discarded, i.e. ignored and not used in determining a time offset to be used in adjusting the local clock 16.

At step 104, if the network delay from step 100 is within epsilon of delta, then delta is set to an average of the previous value of delta and the network delay from step 100. Any running average may be used, e.g. exponential averaging.

At step 106, if the network delay from step 100 is smaller than delta - epsilon, then the previously computed running average, if any, is discarded and delta is set to the network delay from step 100.

The above process repeats with for each incoming timing packet.

The discarding of timing packets having an excessive network delay reduces the number of timing packets available for time synchronization. The present techniques include controlling the discarding of timing packets using the adjustable threshold so that the quality of delay measurements may be balanced against the number of measurements needed given the capability of the local clock 16 in maintaining time synchronization in the absence of time updates.

For example, the path taken by a timing packet through the communication network 30 may be represented as a series of queues, i.e. a series of i delay elements each having a delay distribution with a practical minimum. The delay elements may be regarded as mutually independent and as having substantially similar delay distributions. The delay introduced by each delay element averaged over an acceptable time between delay estimates is d1, d2...dn. The value of epsilon may be adjusted by adding d1 to it, and then adding d2 to it, and then adding d3 to it, etc., until the probability of the remaining n-i elements simultaneously introducing their minimum delay is sufficiently large, i.e. the expected time between timing packets that are not discarded is sufficiently small.

It may not be known how many delay elements in a communication network cause significant delay. Given that the delay di is mapped onto values of epsilon, a smallest and largest delay fluctuation may be estimated and the span between the smallest and the largest may be partitioned into n ranges. This enables an adjustment of the balance between frequency and variance of the network delay corrections.

The above technique for subdividing the largest network delay in timing packet transfer provides a set of control steps in an adjustable threshold. The number of control steps used for the adjustable threshold may depend on how efficiently the local clock 16 coasts, i.e. on how frequently time updates to the local clock 16 are needed to maintain sufficient synchronization.

Several instances of a process embodying the steps 100-106 may be executed in parallel. Each instance may have a different value of i, and different weights may be assigned to the network delay estimates yielded by the instances. The instance with 1=1 will produce network delay estimates least often but with the highest weight. The instance with i=n will produce a network delay estimate for every incoming timing packet but with the lowest weight.

A time offset to be applied the local clock 16 is determined in response to each incoming timing packet received via the communication network 30. If a time offset is relatively large, i.e. significantly greater than epsilon, then it may be assumed that the large time offset is a result of excessive network delay in a timing packet rather than a sudden erratic behavior of the local clock 16 that requires correction. Therefore, the inordinately large time adjustments may be discarded.

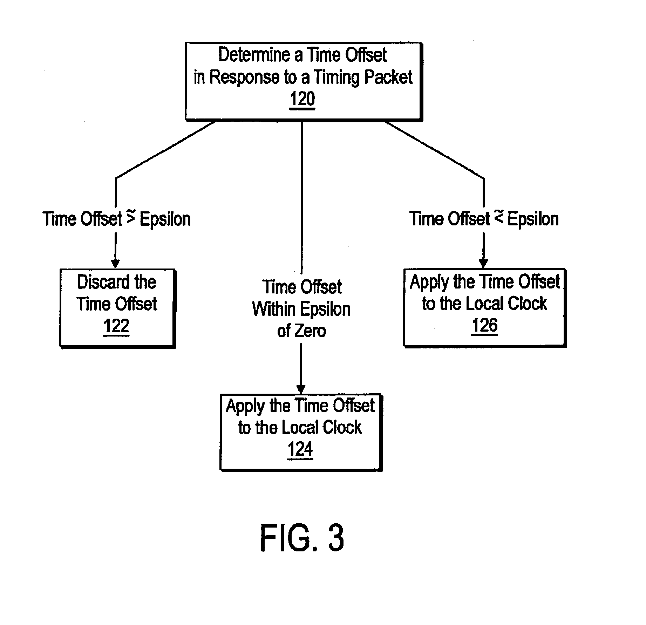

Figure 3 shows a method for removing fluctuations from time offset adjustments to be applied to the local clock 16 according to the present teachings.

Initially, a value for epsilon is selected. The initial value for epsilon is an estimate of the expected time offset fluctuation for timing packets that are not delayed. The initial value for epsilon may the standard deviation of time offsets from the timing packets which have been used so far for time synchronization. For the first one or two timing packets this may be a very large value.

At step 120, a time offset is determined in response to a timing packet. For example, a time offset may be determined using equation 1 above.

At step 122, if the absolute value of the time offset from step 120 is algebraically larger than epsilon, then the timing packet is ignored and the time offset is discarded.

At step 124, if the time offset from step 120 is within epsilon of 0, then the time offset is applied to the local clock 16.

At step 126, if the absolute value of the time offset from step 120 is algebraically smaller than epsilon, then any previously-computed running average is discarded and the time offset is applied to the local clock 16.

The timing packets that are discarded may include information that is useful in time synchronization. The timing packets that are subject to queuing delay may be characterized by a collective distribution, e.g. a Poisson distribution, which may be time-varying depending on the traffic on the communication network 30. The distribution may be modeled as a member of a family of distributions with a finite number (e.g. 1) of parameters. As a consequence, the network delay experienced by all of the timing packets including those discarded may be used to estimate the parameters and formulate a prediction of the time until the next usable timing packet in terms of network delay.

If the next timing packet that is not discarded is too far in the future, allowing for an imprecise parameter estimation, and an inexact prediction, an appropriate action may be taken. One example of an action is to change the value of i in the series of delay elements discussed above. The value of i may be changed back when statistics improve. Another example of an action is to temporarily request forward or reverse time synchronization measurements at an increased rate. Reverse measurements are performed by the device 12 having the local clock 16. For forward measurements, the available actions depend on the clock synchronization protocol. In NTP, forward timing packets are always requested by the slave. In IEEE 1588 time synchronization, the slave may request an additional or an earlier reverse measurement.

Another example of an action is to use past statistics of accepted timing packets to extrapolate a time offset. This is a normal operation in IEEE 1588 time synchronization given that delay timing packets arrive less often than synchronization timing packets. This prediction can be used to choose an optimum value for epsilon. For example, the modeled distribution may state that there is 95% confidence that a timing packet with queuing delay less than epsilon will arrive within any 30 second interval. If the local clock can coast for 30 seconds with the desired accuracy, then epsilon is large enough. If the clock can only coast accurately for 10 seconds, then epsilon may be increased until the model predicts that, with 95% confidence, a usable packet will arrive within 10 seconds. Similarly, the model may be used to choose an epsilon such that there is a 99% probability that a usable packet will arrive within the desired interval.

The foregoing detailed description of the present invention is provided for the purposes of illustration and is not intended to be exhaustive or to limit the invention to the precise embodiment disclosed. Accordingly, the scope of the present invention is defined by the appended claims.

**Claims**

1. A method for network time synchronization, comprising:

    measuring a network delay associated with a timing packet;
    discarding the timing packet if the network delay exceeds an adjustable threshold.

2. The method of claim 1, wherein discarding the timing packet comprises determining a minimum network delay and discarding the timing packet if the network delay is greater than the minimum network delay by more than an adjustable amount.

3. The method of claim 1, further comprising determining the adjustable threshold by determining a balance between a quality of delay measurement and a number of delay measurements that are sufficient for maintaining time synchronization.

4. The method of claim 1, wherein discarding the timing packet comprises determining a plurality of estimates of the network delay and assigning a weight to each estimate.

5. The method of claim 1, wherein discarding the timing packet comprises subdividing a delay range to provide a number of control steps in the adjustable threshold.

6. The method of claim 1, further comprising determining a time offset in response to the timing packet and discarding the time offset if the network delay exceeds the adjustable threshold.

7. A device with network time synchronization, comprising:

local clock (16);
time synchronization circuit (42) that receives a timing packet via a communication network and that determines a network delay in response to the timing packet and that discards the timing packet if the network delay exceeds an adjustable threshold.

8. The device of claim 7, wherein the time synchronization circuit (42) determines a minimum network delay on the communication network and discards the timing packet if the network delay is greater than the minimum network delay by more than an adjustable amount.

9. The device of claim 7, wherein the adjustable threshold provides a balance between a quality of delay measurement and a number of delay measurements that are sufficient for maintaining time synchronization.

10. The device of claim 7, wherein the adjustable threshold is derived from a span of delay fluctuation in timing packet transfer.

Device 10
Local Clock 14
Time Synchronization Circuit 40

20

Communication Network 30

22

Device 12
Local Clock 16
Time Synchronization Circuit 42

## FIG. 1

Determine a Network Delay in Response to a Timing Packet
100

Network Delay > Delta + Epsilon

Discard the Timing Packet
102

Network Delay Within Epsilon of Delta

Set Delta to the Average of the Previous Delta and the Network Delay
104

Network Delay < Delta - Epsilon

Set Delta to the Network Delay
106

## FIG. 2

Determine a Time Offset
in Response to a Timing Packet
120

Time Offset $\gtrsim$ Epsilon

Time Offset $\lesssim$ Epsilon

Discard the
Time Offset
122

Time Offset
Within Epsilon
of Zero

Apply the Time Offset
to the Local Clock
126

Apply the Time Offset
to the Local Clock
124

# FIG. 3

European Patent
Office

**EUROPEAN SEARCH REPORT**

Application Number

EP 06 25 5844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 598 968 A (AGILENT TECHNOLOGIES INC [US]) 23 November 2005 (2005-11-23) * paragraph [0033] - paragraph [0035] * * claims 1,2 * | 1-10 | INV. H04J3/06 G06F1/14 |
| A | WO 02/058295 A (MARCONI COMM LTD [GB]; BARKER ANDREW JAMES [GB]) 25 July 2002 (2002-07-25) * the whole document * | 1-10 | |

TECHNICAL FIELDS SEARCHED    (IPC)

H04J
G06F

The present search report has been drawn up for all claims

| Place of search | Date of completion of the search | Examiner |
|---|---|---|
| Munich | 6 March 2007 | Belloni, Paolo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                                   

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 06 25 5844

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2007

| Patent document cited in search report | | Publication date | Patent family member(s) | | Publication date |
|---|---|---|---|---|---|
| EP 1598968 | A | 23-11-2005 | NONE | | |
| WO 02058295 | A | 25-07-2002 | CA | 2434891 A1 | 25-07-2002 |
| | | | CN | 1496618 A | 12-05-2004 |
| | | | EP | 1354436 A2 | 22-10-2003 |
| | | | GB | 2373400 A | 18-09-2002 |
| | | | JP | 2004523161 T | 29-07-2004 |
| | | | US | 2005100310 A1 | 12-05-2005 |
| | | | US | 2005105643 A1 | 19-05-2005 |

EPO FORM P0459

For more details about this annex : see Official Journal of the European Patent Office, No. 12/82